# EUROPÄISCHE PATENTSCHRIFT

(11) **EP 0 666 240 B1**
(45) Veröffentlichungstag und Bekanntmachung des Hinweises auf die Patenterteilung: **30.06.1999**
(21) Anmeldenummer: 95101051.1
(22) Anmeldetag: 26.01.1995
(51) Int. Cl.: C01B 17/88

(54) **Verfahren zum Eindampfen von Gebrauchtschwefelsäure**
Process for the evaporation of waste sulphuric acid
Procédé d'évaporation d'acide sulfurique usé

(30) Priorität: 08.02.1994 DE 4403841
(43) Veröffentlichungstag der Anmeldung: 09.08.1995
(73) Patentinhaber: Kerr-McGee Pigments GmbH & Co. KG, 47829 Krefeld (DE)
(72) Erfinder: Lailach, Günter, Dr., D-47799 Krefeld (DE)
(74) Vertreter: Hansen, Bernd, Dr. Dipl.-Chem.

(56) Entgegenhaltungen:
- EP-A- 0 022 181
- DE-A- 2 807 380
- US-A- 4 349 412

## Beschreibung

Die Erfindung betrifft ein Verfahren zum Eindampfen von verdünnten Gebrauchtschwefelsäuren unter Vermeidung der Inkrustierung von Wärmeübertragungsflächen und Apparatewänden mit unlöslichen Verbindungen.

Gebrauchtschwefelsäuren müssen aus ökologischen Gründen und zwecks Wiederverwendung der erhaltenen Schwefelwertstoffe üblicherweise aufgearbeitet werden. Die hierfür bekannten Verfahren (EP-A 22 181, EP-A 133 505) sind aufwendig und stellen vor allem dann eine große wirtschaftliche Belastung der verursachenden Produktion dar, wenn die Konzentration der Gebrauchtsäuren gering ist. Besonders bei diesen sogenannten Dünnsäuren, wie sie bei der Titandioxid-Produktion, in Beizereien, bei der Herstellung organischer Verbindungen und anderen Prozessen anfallen, mit H₂SO₄-Konzentrationen zwischen 10 und 50 Gew.-%, tritt häufig das Problem auf, daß es in Anlagen mit indirekter Zuführung der Verdampfungswärme über Wärmeaustauschflächen während der Eindampfung zur Bildung von quasi unlöslichen Belägen auf den Wärmeübertragungsflächen und den produktberührten Apparateteilen kommt. Gemäß DE-A 2 807 380 soll dieses Problem dadurch vermieden werden, daß die Eindampfung in Gegenwart von mindestens 2 Gew.-% FeSO₄.H₂O erfolgt. Angesichts der guten Löslichkeit von FeSO₄ in verdünnter Schwefelsäure sind zur Realisierung des vorgeschlagenen Verfahrens hohe FeSO₄-Konzentrationen und/oder hohe Schwefelsäurekonzentrationen während der Eindampfung erforderlich. Es ergeben sich also erhebliche Einschränkungen bei den Prozeßparametern. Außerdem wird die Belagbildung nicht wirklich vermieden. Es wird aber wasserlösliches FeSO₄.H₂O in die Beläge eingebaut, so daß beim Spülen der Anlage die unlöslichen Belagkomponenten als Trübe mit entfernt werden. Das stellt bereits eine wesentliche Erleichterung dar, weil die mechanische Entfernung unlöslicher Beläge sehr problematisch und zeitaufwendig ist.

Aufgabe der vorliegenden Erfindung war es, ein Verfahren zur Verfügung zu stellen, das es gestattet, verdünnte Gebrauchtschwefelsäuren durch Eindampfen aufzukonzentrieren, ohne daß dabei die Wärmeübertragungsflächen und sonstigen Apparateteile mit unlöslichen Verbindungen bedeckt werden.

Überraschend wurde gefunden, daß die Abscheidung unlöslicher Beläge während des Eindampfens von Gebrauchtschwefelsäuren ohne Beeinträchtigung des Prozesses dadurch vermieden werden kann, daß die Eindampfung der Gebrauchtsäuren in Gegenwart feinteiliger, unlöslicher oder schwerlöslicher Feststoffe durchgeführt wird. Diese Feststoffe können sowohl vor der Eindampfung in der Gebrauchtsäure suspendiert werden als auch in die erste Eindampfstufe separat eingespeist werden. Besonders geeignet sind Fe₂O₃, das als Abbrand bekannte Oxidgemisch, das bei der thermischen Metallsulfatspaltung anfällt, TiO₂, Rückstände aus dem Titanerzaufschluß, SiO₂ und/oder Anhydrit (CaSO₄). Um Ablagerungen zu vermeiden und eine hohe Wirksamkeit zu erzielen, muß die Korngröße kleiner als 10 µm, vorzugsweise soll sie überwiegend Kleiner als 2 µm sein.

Wesentlich beim erfindungsgemäßen Verfahren ist, daß die unlöslichen oder schwerlöslichen, feinteiligen Feststoffe in den Eindampfstufen in der einzudampfenden Schwefelsäure suspendiert sind. Außerdem sollte die Schwefelsäure weniger als 2 Gew.-% festes FeSO₄.H₂O enthalten. Unter Eindampfbedingungen, bei denen 2 Gew.-% oder mehr festes FeSO₄.H₂O in der Säure vorliegen, bringen die erfindungsgemäß zugesetzten Feststoffe keine merklichen Vorteile, aber auch keine Nachteile.

Gegenstand der Erfindung ist daher ein Verfahren zum mehrstufigen Eindampfen von Gebrauchtschwefelsäure mit einer Schwefelsäurekonzentration von 10 bis 50 Gew.-% unter indirekter Zuführung der Verdampfungswärme über Wärmeaustauschflächen, welches dadurch gekennzeichnet ist, daß das Eindampfen der Gebrauchtschwefelsäure in Gegenwart unlöslicher oder schwerlöslicher, feinteiliger Feststoffe mit Korngrößen unter 10 µm, vorzugsweise unter 2 µm die in der Gebrauchtschwefelsäure in einer Menge von weniger als 0,1 Gew.-% suspendiert vorliegen durchgeführt wird.

Bevorzugt werden als feinteilige Feststoffe Fe₂O₃, TiO₂, SiO₂, Anhydrit, Abbrand aus der Metallsulfatspaltung und/oder Rückstände aus dem Titanrohstoffaufschluß eingesetzt.

Die feinteiligen Feststoffe liegen in Mengen von weniger als 0,1 Gew.-% in der einzudampfenden Gebrauchtschwefelsäure, besonders bevorzugt in Mengen von 0,002 bis 0,03 Gew.-%, suspendiert vor.

Die feinteiligen Feststoffe werden bevorzugt in die erste Eindampfstufe in Mengen von weniger als 0,1 Gew.-%, vorzugsweise 0,002 bis 0,03 Gew.-%, bezogen auf die Menge der in dieser Eindampfstufe eingespeisten Gebrauchtschwefelsäure zugeführt.

Durch die Zugabe von 0,002 Gew.-% der feinsten Abbrandfraktion aus der Metallsulfatspaltung, deren Korngrößen durchschnittlich 0,2 µm betragen, konnte beispielsweise bei einer vierwöchigen Versuchsdauer die Bildung von unlöslichen Belägen in der ersten Stufe einer 3-stufigen Vakuumeindampfanlage zur Konzentrierung von Dünnsäure aus einer Titandioxidproduktion vollständig vermieden werden, während in einer parallelen Anlage im gleichen Zeitraum ein ca. 1 bis 2 mm dicker SiO₂-Belag abgeschieden wurde, wodurch besonders der Wärmeübergang und das Strömungsverhalten im Röhrenwärmetauscher beeinträchtigt wurden.

## Patentansprüche

1. Verfahren zum mehrstufigen Eindampfen von Gebrauchtschwefelsäure mit einer Schwefelsäurekonzentration von 10 bis 50 Gew.-% unter indirekter Zuführung der Verdampfungswärme über Wärmeaustauschflächen, dadurch gekennzeichnet, daß die Eindampfung der Gebrauchtschwefelsäure in Gegenwart unlöslicher oder schwerlöslicher, feinteiliger Feststoffe mit Korngrößen unter 10 µm, die in der Gebrauchtschwefelsäure in einer Menge von weniger als 0,1 Gew.-% suspendiert vorliegen, durchgeführt wird.

2. Verfahren nach Anspruch 1, dadurch gekennzeichnet, daß als feinteilige Feststoffe Fe₂O₃, TiO₂, SiO₂, Anhydrit, Abbrand aus der Metallsulfatabspaltung und/oder Rückstände aus dem Titanrohstoffaufschluß eingesetzt werden.

3. Verfahren nach Anspruch 1 oder 2, dadurch gekennzeichnet, daß die feinteiligen Feststoffe Korngrößen unter 2 µm aufweisen.

4. Verfahren nach Anspruch 3, dadurch gekennzeichnet, daß 0,002 bis 0,03 Gew.-% feinteilige Feststoffe in der einzudampfenden Gebrauchtschwefelsäure suspendiert vorliegen.

5. Verfahren nach Anspruch 1, dadurch gekennzeichnet, daß in die erste Eindampfstufe weniger als 0,1 Gew.-%, vorzugsweise 0,002 bis 0,03 Gew.-% feinteilige Feststoffe, bezogen auf die Menge der in diese Eindampfstufe eingespeisten Gebrauchtschwefelsäure zugeführt werden.

## Claims

1. Process for multi-stage evaporation of spent sulphuric acid having a sulphuric acid concentration of 10 to 50 wt.% with indirect supply of heat of evaporation via heat-exchange surfaces, characterised in that evaporation of the spent sulphuric acid is carried out in the presence of insoluble or poorly soluble, finely divided solids having grain sizes below 10 µm, which are present suspended in the spent sulphuric acid in a quantity of less than 0.1 wt.%.

2. Process according to claim 1, characterised in that Fe₂O₃, TiO₂, SiO₂, anhydrite, burn-off from metal sulphate cleavage and/or residues from digestion of titanium raw material are used as finely divided solids.

3. Process according to claim 1 or 2, characterised in that the finely divided solids have grain sizes below 2 µm.

4. Process according to claim 3, characterised in that 0.002 to 0.03 wt.% of finely divided solids are present suspended in the spent sulphuric acid to be evaporated.

5. Process according to claim 1, characterised in that less than 0.1 wt.%, preferably 0.002 to 0.03 wt.%, of finely divided solids, are supplied to the first evaporation stage based on the quantity of spent sulphuric acid fed to this evaporation stage.

## Revendications

1. Procédé de concentration par évaporation en plusieurs étapes d'acide sulfurique usé, avec une concentration de l'acide sulfurique de 10 à 50 % en poids, avec apport indirect de la chaleur d'évaporation par des surfaces d'échange thermique, caractérisé en ce que la concentration par évaporation de l'acide sulfurique usé est effectuée en présence de solides finement divisés insolubles ou difficilement solubles, ayant des tailles de grains inférieures à 10 µm, se présentant en suspension dans l'acide sulfurique usé, en une quantité inférieure à 0,1 % en poids.

2. Procédé selon la revendication 1, caractérisé en ce qu'on utilise comme solides finement divisés Fe₂O₃, TiO₂, SiO₂, un anhydrite, un résidu de grillage issus de la séparation des sulfates métalliques et/ou des dépôts issus de la préparation des matières premières du titane.

3. Procédé selon la revendication 1 ou 2, caractérisé en ce que les solides finement divisés présentent une taille de grain inférieure à 2 µm.

4. Procédé selon la revendication 3, caractérisé en ce que l'acide sulfurique soumis à la concentration par évaporation contient en suspension de 0,002 à 0,03 % en poids de solides finement divisés.

5. Procédé selon la revendication 1, caractérisé en ce que dans la première étape de concentration par évaporation est amené moins de 0,1 % en poids, de préférence de 0,002 à 0,03 % en poids de solides finement divisés, rapportés à la quantité de l'acide sulfurique usé apporté dans cette étape de concentration par évaporation.
